# EUROPÄISCHE PATENTSCHRIFT

(11) **EP 3 396 409 B1**
(45) Veröffentlichungstag und Bekanntmachung des Hinweises auf die Patenterteilung: **27.11.2019**
(21) Anmeldenummer: 18166937.5
(22) Anmeldetag: 12.04.2018
(51) Int. Cl.: G06T 7/73, G01S 17/02, G01S 17/42, G01S 17/89, G01S 7/48, G01S 7/497, G06T 7/80

(54) **VERFAHREN ZUR KALIBRIERUNG EINER KAMERA UND EINES LASERSCANNERS**
METHOD FOR CALIBRATING A CAMERA AND A LASER SCANNER
PROCÉDÉ D'ÉTALONNAGE D'UNE CAMÉRA ET D'UN BALAYEUR LASER

(30) Priorität: 27.04.2017 DE 102017109039
(43) Veröffentlichungstag der Anmeldung: 31.10.2018
(73) Patentinhaber: Sick AG, 79183 Waldkirch (DE)
(72) Erfinder: Beinschob, Patric, 22043 Hamburg (DE)

(56) Entgegenhaltungen:
- DE-A1-102004 033 114
- GB-A- 2 507 560
- US-A1- 2016 070 981

## Beschreibung

Die Erfindung betrifft ein Verfahren zur Kalibrierung einer Kamera und eines Laserscanners nach dem Oberbegriff von Anspruch 1 sowie ein entsprechendes System gemäß Anspruch 14.

In einem Laserscanner tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden. Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer, und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonspiegelrad auf, um periodisch eine Überwachungsebene oder ein Segment einer Überwachungsebene abzutasten. Alternativ rotiert ein aktiver Messkopf mit Lichtsender und Lichtempfänger. 3D-Laserscanner erfassen einen dreidimensionalen Raumbereich und nicht lediglich eine Fläche. Das kann durch Bewegung um eine weitere Achse realisiert werden, sei es in einer Schwenk- oder einer vollständigen Drehbewegung. In der DE 10 2008 032 216 A1 beispielsweise wird die gesamte Scaneinheit samt Sender, Empfänger und Drehspiegel auf einem Ablenkteller angeordnet. Die EP 1 965 225 A2 offenbart verschiedenste Möglichkeiten, die Drehbewegung eines Laserscanners mit einer zusätzlichen Kippbewegung zu kombinieren.

Kamera und Laserscanner sind Sensoren, die einander sehr gut ergänzen. Während der Laserscanner genutzt wird, um die Geometrie einer Szene abzutasten, kann die Kamera den visuellen Eindruck der Szene und damit Eigenschaften wie Beleuchtung, Materialen oder Texturen erfassen. Oftmals ist es wünschenswert, beide Sensordatenquellen zu kombinieren beziehungsweise zu fusionieren, um so die Umgebung naturgetreu zu digitalisieren. Dadurch können optischer Eindruck und Geometrie auf Computern reproduziert werden, um beispielsweise Planungsaufgaben nicht mehr vor Ort durchführen zu müssen.

Für eine korrekte Sensorfusion muss die sogenannte Extrinsik bekannt sein, also die Transformation zwischen dem optischen Zentrum des Laserscanners und der Kamera. Diese Transformation umfasst im Allgemeinen die Translation in drei Raumdimensionen und die drei Drehwinkel im Raum und hat daher sechs Freiheitsgrade. Die Bestimmung der Transformation wird extrinsische Kalibrierung genannt. Man kann dies auch als Bestimmung der Umrechnungsvorschrift zwischen den jeweiligen lokalen Koordinatensystemen beziehungsweise in ein globales Koordinatensystem beschreiben, wofür auch der Begriff Registrierung üblich ist.

Die akademische Literatur zu extrinsischer Kalibrierung beschreibt Techniken, die von einem definiertem Kalibrierobjekt ausgehen beziehungsweise das Objekt aus mehreren Perspektiven erfassen müssen, um die Transformation zu schätzen.

In der Arbeit Pandey, Gaurav, et al. "Extrinsic calibration of a 3d laser scanner and an omnidirectional camera." IFAC Proceedings Volumes 43.16 (2010): 336-341 wird ein genau definiertes Schachbrett benutzt, das von verschiedenen Perspektiven gesehen werden muss. Nach dem Artikel Park, Yoonsu, et al. "Calibration between color camera and 3D LIDAR instruments with a polygonal planar board." Sensors 14.3 (2014): 5333-5353 wird statt eines Schachbrettes ein genau definiertes Rautenförmiges Objekt als Kalibriertarget benutzt. Kalibrierobjekte, so genau sie bei ihrer Erzeugung definiert waren, können sich über die Zeit verändern, etwa durch Abnutzung ihre Form oder Farbe verlieren. Ein exakt definiertes Kalibrierobjekt kann schwierig oder nur mit hohen Kosten zu beschaffen sein, oder es ist gerade nicht verfügbar, wenn man es beispielsweise während einer Messkampagne braucht.

Nach Scaramuzza, Davide, Ahad Harati, and Roland Siegwart. "Extrinsic self calibration of a camera and a 3d laser range finder from natural scenes." Intelligent Robots and Systems, 2007. IROS 2007. IEEE/RSJ International Conference on. IEEE, 200 wird zwar kein Kalibrierobjekt benutzt. Dafür müssen manuell Korrespondenzen definiert werden, die zur Transformationsschätzung benutzt werden, was einen hohen Aufwand bedeutet und je nach Erfahrung auch fehlerbehaftet ist.

Ein konzeptionell sehr einfaches Vorgehen besteht in einem einfachen manuellen Durchprobieren der sechs Translations-und Rotationsparameter, bis die geometrischen Daten des Laserscanners und die Kameradaten optisch deckungsgleich werden. Das ist aber meist sehr ungenau und schwer zu reproduzieren, weshalb die geschätzte Transformation eine geringe Wiederholgenauigkeit hat und die Genauigkeit auch nicht quantifizierbar ist.

Die WO 2013/155564 A1 offenbart ein verbundenes System aus einem 3D-Laserscanner und einem Bildsensor. Zwar wird auf die Notwendigkeit hingewiesen, beides zueinander zu kalibrieren, für das konkrete Vorgehen dann aber nur auf die bereits diskutierte akademische Literatur zurückgegriffen.

In der US 8 290 305 B2 wird ein Verfahren zur Registrierung einer 3D-Punktwolke und zweidimensionaler Bilddaten beschrieben. Einleitend wird dort eine Möglichkeit erwähnt, die jeweilige reflektierte Intensität des Abtaststrahls eines LIDAR-Systems zu messen und dadurch mit dem LIDAR ein 2D-Bild aufzunehmen, das einem üblichen 2D-Kamerabild mehr ähnelt als die 3D-Messdaten. Der Ansatz, dieses 2D-Bild der Registrierung zugrunde zu legen, wird dann aber wegen vieler Nachteile sofort verworfen.

Die US 2016/0070981 A1 offenbart ein Verfahren zum Kalibrieren einer Kamera auf einem Fahrzeug. Das Fahrzeug trägt außer der Kamera einen Laserscanner und ein Inertialmesssystem, wobei das Inertialmesssystem bereits zum Fahrzeug und der Laserscanner zum Inertialmesssystem kalibriert ist. Nur die Kamera ist anfangs beweglich und soll in ihrer gewählten Position zu dem Laserscanner kalibriert werden. Die Laserscannerdaten enthalten nicht nur dreidimensionale Koordinaten, sondern auch Intensitätsinformationen des reflektierten Laserlichts. Ein daraus erzeugtes Bild aus hellen Punkten wird mit von der Kamera aufgenommenen Bildern verglichen, um Übereinstimmungen zu finden, aus denen dann in Kenntnis der zwischenzeitlichen Bewegung des Fahrzeugs die Transformation zwischen Laserscanner und Kamera berechnet wird.

Die GB 2 507 560 A befasst sich mit der extrinsischen Kalibrierung einer Kamera und eines 2D-Lidars in Bewegung. Dabei wird unter Verwendung einer vorläufigen Kalibrierung aus den Laserpunkten anhand der Bewegungsbahn eine 3D-Punktwolke erzeugt, diese in die Kamerakoordinaten projiziert und daraus ein Remissionsbild erzeugt. Es wird eine Metrik berechnet, welche die Übereinstimmung zwischen Kamera- und Remissionsbild bewert, und diese Metrik wird dann iterativ unter jeweiliger Störung der vorläufigen Kalibrierung maximiert.

Die DE 10 2004 033 114 A1 beschreibt ein Verfahren zur Kalibrierung eines Abstandsbildsensors, beispielsweise eines Laserscanners. An einem Fahrzeug sind sowohl der Laserscanner als auch eine Videokamera vorgesehen. Nach erfolgter Kalibrierung des Laserscanners mit Hilfe eines Kalibrierziels werden Kalibriermerkmale des Kalibrierziels in dem Videobild gesucht, anhand derer auch die Kamera kalibriert wird.

Vor diesem Hintergrund ist Aufgabe der Erfindung, die erläuterte Kalibrierung zu verbessern.

Diese Aufgabe wird durch ein Verfahren zur Kalibrierung einer Kamera und eines Laserscanners nach Anspruch 1 sowie ein entsprechendes System nach Anspruch 14 gelöst. Als Ausgangspunkt nimmt die Kamera ein Kamerabild einer Szenerie auf. Der Laserscanner tastet die Szenerie ab und misst die jeweilige Intensität des remittierten oder reflektierten Abtaststrahls. Im Laufe der Abtastbewegung kann so ebenfalls ein Bild zusammengesetzt werden, das als Remissionsbild bezeichnet wird. Aus einem Vergleich von Kamerabild und Remissionsbild werden dann ein Versatz beziehungsweise eine Orientierung von Kamera und Laserscanner zueinander bestimmt. Diese Bestimmung einer Transformationsvorschrift zwischen den lokalen Koordinatensystemen wird auch Registrierung oder extrinsische Kalibrierung genannt.

Die Erfindung geht nun von dem Grundgedanken aus, eine Kalibrierung trotz der nur zweidimensionalen Ausgangsdaten in Kamera- und Remissionsbild auf Basis einer Korrespondenzsuche im dreidimensionalen Raum durchzuführen. Zu dem Remissionsbild gibt es Entfernungswerte aufgrund der Messung des Laserscanners. Für das Kamerabild werden Entfernungen rekonstruiert. Damit können dann 3D-3D-Korrespondenzen gefunden werden, d.h. übereinstimmende Merkmale wie beispielsweise Pixelgruppen, Kanten oder Ecken, besondere Kontraste und dergleichen. Eine ergänzende oder vorausgehende zweidimensionale Korrespondenzsuche in 2D ist aber nicht ausgeschlossen.

Die Erfindung hat den Vorteil, dass eine einfache, weitestgehend automatische extrinsische Kalibrierung ermöglicht wird. Sie liefert reproduzierbare Ergebnisse, wobei die Lösung auch durch ein Gütemaß bewertbar ist. Ein Kalibrierobjekt ist dafür nicht erforderlich. Es genügt jeweils ein statisches Kamera- und Remissionsbild, das Verfahren kommt ohne Bewegung von Kamera und Laserscanner aus. Dabei ist wichtig darauf hinzuweisen, dass sich gerade bei großen Sichtfeldern Kamerabild und Remissionsbild erst einmal nicht besonders ähnlich sind. Das stützt die Aussagen der oben zitierten US 8 290 305, dass eine Kalibrierung auf Basis von Kamerabild und Remissionsbild zunächst unbefriedigend ist. Das liegt neben den sichtbaren Unterschieden in den Ausgangsbildern auch daran, dass 2D-2D-Korrespondenzpaare nur schwache Beiträge zur Korrespondenzschätzung liefern. Die Erfindung zeigt, dass sehr wohl 3D-3D-Korrespondenzen gefunden werden können, was zu entscheidend besseren Ergebnissen führt, und damit eine stabile Transformationsschätzung möglich ist.

Die Kamera ist vorzugsweise eine 2D-Kamera. Mit einer 3D-Kamera könnten Korrespondenzen direkt im dreidimensionalen Raum mit den jeweiligen Punktwolken von Kamera und Laserscanner gesucht werden.

Die Entfernungen in dem Kamerabild werden vorzugsweise mit Hilfe der Entfernungen des Remissionsbildes rekonstruiert. Da Kamera und Laserscanner zumindest teilweise die gleiche Szenerie aufgenommen haben, sind die Entfernungen durch die Messung mit dem Laserscanner prinzipiell bekannt. Sie können daher auf das Kamerabild übertragen werden, sobald beispielsweise im Rahmen einer Korrespondenzsuche bekannt ist, welche Entfernung zu welchem Bereich oder welchem Merkmal des Kamerabildes gehört.

Vorzugsweise werden erste Merkmale in dem Kamerabild bestimmt und vorgegebene Entfernungen projiziert. Diese Projektion nutzt vorzugsweise die Intrinsik oder die intrinsischen Parameter der Kamera, die wiederum bekannt oder durch eine an sich bekannte intrinsische Kalibrierung bestimmt sind. Noch bevorzugter wird auf die Einheitssphäre projiziert. Die dadurch gewonnenen Entfernungen sind nicht die tatsächlichen Entfernungen, zumindest für einen ersten Schritt einer Korrespondenzsuche im dreidimensionalen Raum jedoch geeignet. Es ist nicht ausgeschlossen, anstelle der Einheitssphäre einen anderen Radius oder sogar eine andere in den dreidimensionalen Raum eingebettete Fläche zu nutzen, aber davon sind eher Verzerrungen als bessere Ergebnisse zu erwarten.

Vorzugsweise werden zweite Merkmale in dem Remissionsbild bestimmt und auf vorgegebene Entfernungen projiziert, insbesondere auf die Einheitssphäre. Für die zweiten Merkmale sind die tatsächlichen Entfernungen aufgrund der Messung des Laserscanners bekannt. Sie werden aber hier vorerst ignoriert und auf vorgegebene Entfernungen gesetzt. Die Projektion auf die Einheitssphäre ist rechnerisch sehr einfach, weil die Entfernungen auf radialen Strahlen gemessen werden und direkt auf Eins gesetzt werden können. Wie schon bei den ersten Merkmalen kann anstelle der Einheitssphäre ein anderer Radius oder sogar eine andere Fläche verwendet werden, jedoch sollten erste und zweite Merkmale auf die gleiche Fläche projiziert werden. Die gemessenen Entfernungen werden vorzugsweise nicht verworfen, sondern für spätere Schritte gespeichert.

Vorteilhafterweise wird eine erste Korrespondenzsuche im dreidimensionalen Raum zwischen den ersten Merkmalen und den zweiten Merkmalen durchgeführt. Die erste Korrespondenzsuche findet auf Basis von durch die Projektion entstandenen künstlichen Entfernungen statt, ist jedoch auch schon eine Korrespondenzsuche im dreidimensionalen Raum.

Vorzugsweise werden nur eineindeutige Korrespondenzpaare zugelassen und/oder in einer Umgebung eines Korrespondenzpaares keine weiteren Merkmale vorhanden sein dürfen. Die gefundenen Korrespondenzen werden also noch gefiltert, um nur anhand von besonders zuverlässigen Korrespondenzen zu kalibrieren. Dazu sollten also Korrespondenzen in beide Richtungen erkannt sein, und um Fehlzuordnungen zu reduzieren, sollten in der direkten Umgebung keine weiteren Merkmale zu finden sein.

Den ersten Merkmalen eines Korrespondenzpaares wird vorzugsweise die mit dem Laserscanner gemessene Entfernung des zugehörigen zweiten Merkmals zugewiesen, um korrigierte erste Merkmale zu gewinnen. Die Korrespondenz bedeutet, dass nach bisheriger Annahme die Kamera dasselbe Merkmal aufgenommen hat wie der Laserscanner. Daher ist die gemessene Entfernung des Laserscanners die bessere Schätzung als die festgelegte anfängliche Entfernung auf der Einheitssphäre. Die korrigierten ersten Merkmale sind folglich echte 3D-Merkmale, die nicht länger nur auf künstlichen Entfernungen basieren.

Vorzugsweise wird eine zweite Korrespondenzsuche im dreidimensionalen Raum zwischen den korrigierten ersten Merkmalen und den zweiten Merkmalen durchgeführt. Bei dieser erneuten Korrespondenzsuche sind die Merkmale nicht mehr auf eine vorgegebene Entfernung projiziert, sondern verwenden die gemessene Entfernung. Im Falle der zweiten Merkmale wurde diese Entfernung direkt durch den Laserscanner gemessen. Die korrigierten ersten Merkmale haben die Entfernung von dem korrespondierenden zweiten Merkmal übernommen. Es handelt sich folglich um eine echte 3D-Korrespondenzsuche, in der die Nachbarschaftsbeziehungen auch in Entfernungsrichtung voll zum Tragen kommen.

Die ersten Merkmale und die zweiten Merkmale der gefundenen Korrespondenzpaare werden vorzugsweise durch eine insbesondere nichtlineare Optimierung von Versatz und/oder Orientierung bestmöglich übereinander gelegt. Dafür stehen mächtige Algorithmen zur Verfügung, und Versatz und Orientierung bei optimaler Übereinstimmung sind die gesuchten Transformationsparameter für die Kalibrierung beziehungsweise Sensorfusion.

Vorteilhafterweise wird eine Güte der Übereinstimmung berechnet. Die Optimierungsverfahren liefern eine derartige Güte meist mit, etwa in Form einer Kovarianzmatrix. Sie kann auch vorgegeben und beispielsweise als Abbruchkriterium der nichtlinearen Optimierung genutzt werden. Damit ist bekannt, wie groß beispielsweise der kumulierte Restfehler der übereinander gelegten Merkmale noch ist. Bewertet werden kann auch, wie gut die zugrunde gelegten Korrespondenzen waren.

Der Laserscanner ist bevorzugt ein 3D-Laserscanner. Der Laserscanner tastet also nicht nur durch eine Schwenk- oder Rotationsbewegung einer Ebene ab, sondern variiert auch den Nickwinkel. Die konkrete Raumkurve der Abtastbewegung ist für die Erfindung nicht von Belang. Jedenfalls wird auf diese Weise ein 2D-Remissionsbild erfasst, das mit dem 2D-Kamerabild besonders gut vergleichbar ist.

Die Szenerie für die Kalibrierung wird bevorzugt belassen, wie sie ist. Die Kalibrierung erfolgt also anhand natürlicher Merkmale, die in der Szenerie von Anfang an vorhanden sind. Das vereinfacht das Verfahren für den Anwender weiter. Insbesondere muss kein Kalibrierobjekt in der Szenerie angeordnet werden, und dementsprechend sind auch keine genauen Spezifikationen hinsichtlich Abmessungen und Form einzuhalten oder für das Verfahren vorzugeben.

Für die Kalibrierung wird alternativ mindestens ein Gegenstand mit einem gewünschten Remissionsverhalten in der Szenerie angeordnet, um den Kontrast zu erhöhen. Damit ist immer noch kein Kalibrierobjekt mit speziellen Eigenschaften oder Mustern gemeint. Es geht lediglich darum, in einer strukturlosen Szenerie, etwa einem leeren Raum mit weißen Wänden, für ausreichend Kontrast und damit potentielle Merkmale zu sorgen, mit denen Korrespondenzen gebildet werden können. Dafür genügen einfache und überall verfügbare Alltagsgegenstände, beispielsweise Pappe oder Fotokarton. Weiterhin müssen weder besondere Abmessungen eingehalten noch die Kalibrierung damit parametriert werden.

Das erfindungsgemäße System weist die Kamera, den Laserscanner sowie eine Auswertungseinheit auf, in der das Verfahren zur Kalibrierung abläuft. Die Auswertungseinheit kann in beliebiger Hardware realisiert und auch beliebig auf Kamera, Laserscanner und/oder ein speziell dafür angeschlossenes oder universelles externes Gerät wie ein Notebook oder ein Smartphone verteilt sein. Es bedarf lediglich einer gewissen Rechenleistung sowie des Zugriffs auf die Rohdaten von Kamera und Laserscanner. Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Anordnung einer Kamera, eines Laserscanners und einer Auswertungseinheit zur Kalibrierung für eine Sensorfusion; und
- Fig. 2: ein beispielhaftes Ablaufschema einer Kalibrierung von Kamera und Laserscanner für deren Sensorfusion.

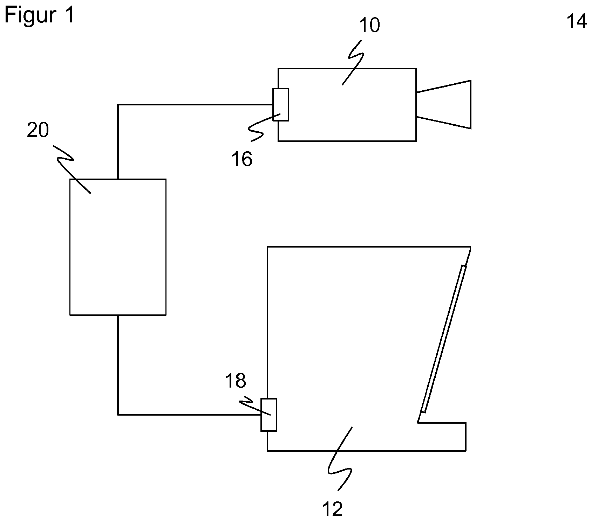

Figur 1 zeigt eine schematische Darstellung einer Anordnung einer Kamera 10 und eines Laserscanners 12. Die Kamera 10 ist eine Farb- oder Monochromkamera, möglicherweise auch außerhalb des sichtbaren Spektrums wie bei einer IR-Kamera, die ein zweidimensionales Kamerabild einer Szenerie 14 aufnimmt.

Das Funktionsprinzip des Laserscanner 12 ist an sich bekannt und einleitend beschrieben. Für die Erfindung ist nicht relevant, welcher konkrete Aufbau für den Laserscanner 12 gewählt wird. Allerdings ist der Laserscanner 12 vorzugsweise ein 3D-Laserscanner, um einen zu dem Sichtfeld der Kamera 10 vergleichbaren Erfassungsbereich zu erhalten.

Der Laserscanner 12 erfasst ebenfalls die Szenerie 14. Dabei gibt es einen Überlapp zwischen Sichtfeld der Kamera 10 und Erfassungsbereich des Laserscanners 14, der vorzugsweise groß oder sogar vollständig ist, denn nur dort können die Daten für eine Kalibrierung genutzt werden und später im Betrieb diversitär zu einer Fusion beitragen. In nicht überlappenden Bereichen ist aber auch eine Datenfusion in dem Sinne möglich, dass an den Rändern zumindest die Kamera 10 oder der Laserscanner 12 noch Daten beiträgt. Typischerweise hat der Laserscanner 12 den breiteren Erfassungsbereich, aber die Kamera 10 kann durch Panoramaoptiken und dergleichen ebenfalls ein breites Sichtfeld erfassen.

Der Laserscanner 12 misst Entfernungen wie einleitend erläutert. Zugleich ist der Laserscanner 12 aber auch in der Lage, neben der Distanzmessung auch die Intensität des wieder empfangenen Abtaststrahls zu bestimmen. Dadurch lässt sich nach und nach im Verlauf der Abtastbewegung ein Remissionsbild aufbauen. Da die jeweiligen S4 Winkelstellungen bekannt sind, können die gemessenen Intensitäten als Pixel des Remissionsbildes an die richtige Stelle gesetzt werden. Wenn der Laserscanner 12 nicht nur eine Ebene abtastet, sondern als 3D-Laserscanner auch den Nickwinkel variiert, ist das Remissionsbild ein zweidimensionales Bild. Die Aufnahme von Kamera- und Remissionsbild erfolgt für die nachfolgend erläuterte Kalibrierung möglichst gleichzeitig, jedenfalls so, dass die Szenerie als quasi-statisch betrachtet werden kann, weil sonst Kalibrationsfehler resultieren.

Über eine Kameraschnittstelle 16 ist die Kamera 10 und über eine Laserscannerschnittstelle 18 der Laserscanner 12 an eine Auswertungseinheit 20 angeschlossen. Dabei kann es sich um eine übergeordnete Steuerung, ein Notebook oder dergleichen handeln. Die hier externe Auswertungseinheit 20 kann alternativ zumindest teilweise intern in Kamera 10 und/oder Laserscanner 12 vorgesehen sein.

Die Auswertungseinheit 20 empfängt das Kamerabild, das Remissionsbild sowie die 3D-Punktwolke der von dem Laserscanner 12 gemessenen Entfernungen oder entsprechende Rohdaten in beliebiger Verarbeitungsstufe, um diese Daten selbst zu gewinnen. Damit erfolgt dann eine Kalibrierung von Kamera 10 und Laserscanner 12 wie nachfolgend beschrieben. Im Betrieb ist somit bekannt, wie die Daten der Kamera 10 und des Laserscanners 12 unter Berücksichtigung von gegenseitigem Versatz und/oder Verkippung miteinander fusioniert werden können.

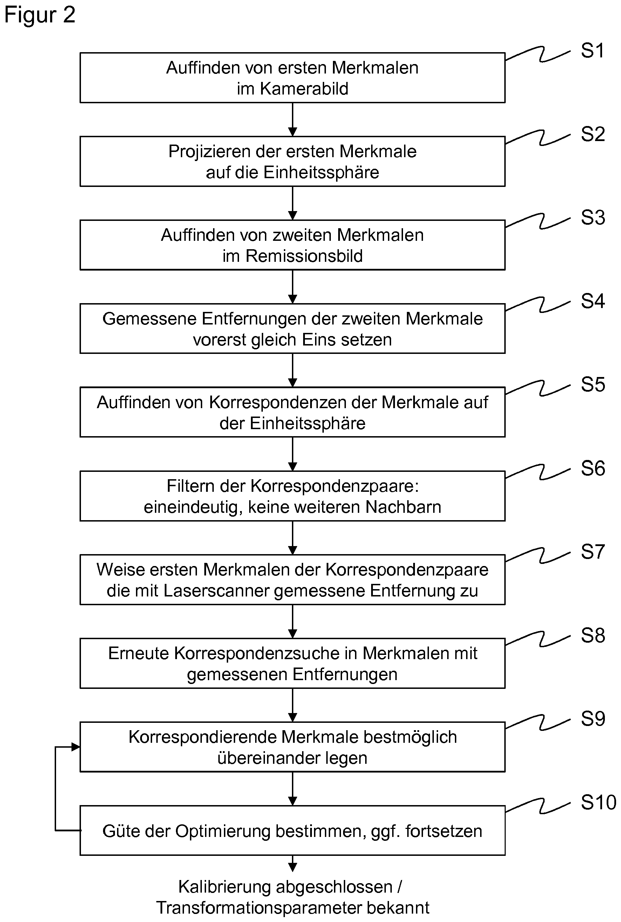

Figur 2 zeigt ein Ablaufschema der Kalibrierung von Kamera 10 und Laserscanner 12. Dabei handelt es sich um ein Beispiel. Insbesondere müssen keineswegs sämtliche Schritte implementiert werden, vielmehr sind mehrere der genannten Schritte rein optional.

In einem Schritt S1 wird das Kamerabild auf markante Stellen untersucht, beispielsweise Stellen mit hohem Kontrast. Einige bekannte Algorithmen dafür sind Harris-Corner-Detektion und weitere Feature-Detektoren wie SIFT (Scale-Invariant Feature Transform), SURF (Speeded Up Robust Features), ORB (Oritented FAST and rotated BRIEF) oder Ähnliches. Dadurch kann eine Menge von ersten Merkmalen des Kamerabildes bestimmt werden, wobei mindestens drei Elemente für das weitere Verfahren erforderlich sind.

In einem Schritt S2 werden die ersten Merkmale aus dem zweidimensionalen Kamerabild in den dreidimensionalen Raum projiziert. Das ist möglich, wenn die Intrinsik der Kamera 10 bekannt oder in einer entsprechenden Kalibration bestimmt ist, also insbesondere die Lage des optischen Zentrums innerhalb der Kamera 10. Ohne Kenntnis der Entfernung kann aber nur in festgelegte, nicht tatsächliche Entfernungen projiziert werden, vorzugsweise auf die Einheitssphäre.

In einem Schritt S3 werden auch in dem Remissionsbild markante Stellen gesucht. Das Vorgehen entspricht dem Schritt S1, und das Ergebnis ist eine Menge von zweiten Merkmalen des Remissionsbildes.

In einem Schritt S4 werden die zweiten Merkmale auf Entfernungen entsprechend den ersten Merkmalen gesetzt. An sich wäre für die zweiten Merkmale auch die tatsächliche Entfernung bekannt, die der Laserscanner 12 gemessen hat. Für das weitere Verfahren sollen aber erste und zweite Merkmale vergleichbar sein, vorzugsweise beide auf der Einheitssphäre.

In einem Schritt S5 werden nun Übereinstimmungen zwischen den ersten Merkmalen und den zweiten Merkmalen gesucht. Korrespondenzpaare können in an sich bekannter Weise beispielsweise durch eine Nächste-Nachbarn-Suche bestimmt werden. Dieser Schritt führt zu einer erheblichen Verbesserung, weil die ursprünglichen Kamera- und Remissionsbilder einander rein visuell keineswegs entsprechen. Das gilt vor allem bei großen Sichtwinkeln, etwa wenn es sich um einen um die optische Achse rotierenden Aufbau handelt und Kamera 10 und Laserscanner 12 jeweils über einen Sichtbereich von bis zu 180° oder noch mehr aufweisen.

In einem Schritt S6 werden die gefundenen Korrespondenzpaare noch gefiltert, damit nur besonders hochwertige Korrespondenzen verbleiben. Mögliche Forderungen sind eineindeutige Korrespondenzpaare oder dass die verwendeten Merkmale in ihrer jeweiligen näheren Nachbarschaft keine weiteren Merkmale aufweisen. Sind die Merkmale innerhalb eines Bildes weit genug voneinander entfernt, dann ist die Zuordnung zwischen Kamera 10 und Laserscanner 12 eineindeutig. Der Abstand der Merkmale im Bild hängt mit der Größe des Objektes im Kalibrierraum zusammen, und deshalb kann unter Umständen Eineindeutigkeit manuell forciert werden, indem größere Objekte in die Szenerie 14 eingebracht werden.

In einem Schritt S7 wird jeweils aus Korrespondenzpaaren den ersten Merkmalen des Kamerabildes die Entfernung des zugehörigen zweiten Merkmals des Remissionsbildes zugewiesen. Für das zweite Merkmal ist die Entfernung durch Messung des Laserscanners 12 bekannt, das künstliche Festlegen im Schritt S4 findet jetzt nicht mehr statt. Dadurch liegen die Merkmale jetzt nicht mehr auf der Einheitssphäre, sondern entsprechend der Messung und Zuweisung im dreidimensionalen Raum.

In einem Schritt S8 wird auf dieser Basis eine erneute Korrespondenzsuche vorzugsweise mit einem engeren Distanzkriterium durchgeführt. Dies ergibt eine verbesserte Korrespondenzliste und ist auch in einer Visualisierung leichter nachzuvollziehen als die Nachbarschaft auf der Einheitssphäre.

In einem Schritt S9 werden die gefundenen Korrespondenzen im dreidimensionalen Raum benutzt, um die extrinsische Transformation mit einem nicht-linearen Optimierungsverfahren zu schätzen. Eine beispielhafte Möglichkeit ist ein Iterative-Closest-Point-Verfahren. Aber auch eine Formulierung als linearisiertes Ausgleichsproblem ist denkbar, das über Gauß-Newton auf Mannigfaltigkeiten gelöst wird. Dadurch lassen sich Probleme mit euklidischen Winkeln vermeiden ("Gimbal Lock"). Robuste, korrespondenzfehlertolerante Optimierungstechniken wie "Robust Kernels" oder M-Estimatoren sind ebenfalls denkbar.

In einem Schritt S10 kann anhand der Korrespondenzen und der Rückprojektion mathematisch auch ein Gütemaß für die ermittelte Lösung abgeleitet werden, etwa über eine Kovarianzmatrix. Es ist auch denkbar, den Schritt S9 oder frühere Schritte zu wiederholen, wenn das Gütemaß noch unbefriedigend ist. Zumindest können falsche Lösungen als solche erkannt und im Einsatz vermieden werden.

Die als Ergebnis gewonnene Transformationsvorschrift umfasst allgemein Versatz und Orientierung mit drei Freiheitsgraden der Translation und drei Freiheitsgraden der Rotation, also die volle gegenseitige 6D-Lage. Es kann aber auch Rahmenbedingungen geben, welche Freiheitsgrade von vorneherein festlegen oder uninteressant machen, wo es dann ausreicht, nur einen entsprechenden Teil der Transformationsvorschrift in weniger Dimensionen zu bestimmen. Ob der gemeinsame Ursprung für die Transformation bei der Kamera 10, dem Laserscanner 12 oder an einer anderen Position liegt, kann frei gewählt werden. Es ist auch äquivalent, eine Umrechnung zwischen den zwei lokalen Koordinatensystemen von Kamera 10 und Laserscanner 12 oder in ein globales Koordinatensystem zu bestimmen.

Die Szenerie 14 kann schon ohne jegliche Maßnahme genug Kontrast aufweisen, um Merkmale in Kamerabild und Remissionsbild zu finden und damit die Kalibrierung auszuführen, so dass das Einbringen von weiteren Objekten unnötig ist. Falls aber die Szenerie 14 kontrastarm ist, was schon anfänglich oder möglicherweise erst an einem unzureichenden Gütemaß in Schritt S10 erkannt wird, können einfache Objekte wie etwa weiße, schwarze oder farbige Pappen in der Szenerie 14 angeordnet werden. Eine größere weiße unter einer schwarzen Pappe bietet einen verlässlichen starken Kontrast. Falls die Kamera 10 im IR-Spektrum aufzeichnet, sollte der Kontrast auch dort bestehen, was aber durch das genannte Beispiel auch gewährleistet wäre. Der oder die Objekte werden für Kamera 10 und Laserscanner 12 sichtbar in der Szenerie 14 angeordnet. Kalibrierobjekte mit besonderen Mustern und Abmessungen sind in keinem Fall notwendig, auch wenn sie sich mit ihren Kontrasten natürlich ebenfalls eignen würden.

## Patentansprüche

1. Verfahren zur Kalibrierung einer Kamera (10) und eines Laserscanners (12) für deren Sensorfusion, bei dem die Kamera (10) ein Kamerabild einer Szenerie (14) aufnimmt und der Laserscanner (12) die Szenerie (14) zumindest teilweise mit einem Abtaststrahl abtastet und aus der jeweiligen Winkelposition des Abtaststrahls und der in der Winkelposition bestimmten Intensität des aus der Szenerie (14) remittierten Abtaststrahls ein Remissionsbild aufzeichnet, wobei aus einem Vergleich von Kamerabild und Remissionsbild ein Versatz und/oder eine relative Orientierung zwischen Kamera (10) und Laserscanner (12) bestimmt wird, wobei mit dem Laserscanner (12) zu dem Remissionsbild auch Entfernungen bestimmt werden,
**dadurch gekennzeichnet,**
**dass** für den Vergleich trotz der nur zweidimensionalen Ausgangsdaten in Kamerabild und Remissionsbild eine Korrespondenzsuche nach 3D-3D-Korrespondenzen von in dem Kamerabild und in dem Remissionsbild übereinstimmenden Merkmalen im dreidimensionalen Raum durchgeführt wird, indem zu dem Kamerabild Entfernungen rekonstruiert werden.

2. Verfahren nach Anspruch 1,
wobei die Entfernungen in dem Kamerabild mit Hilfe der Entfernungen des Remissionsbildes rekonstruiert werden.

3. Verfahren nach Anspruch 1 oder 2,
wobei erste Merkmale in dem Kamerabild bestimmt und auf vorgegebene Entfernungen projiziert werden, insbesondere auf die Einheitssphäre.

4. Verfahren nach einem der vorhergehenden Ansprüche,
wobei zweite Merkmale in dem Remissionsbild bestimmt und auf vorgegebene Entfernungen projiziert werden, insbesondere auf die Einheitssphäre.

5. Verfahren nach Anspruch 3 und 4,
wobei eine erste Korrespondenzsuche im dreidimensionalen Raum zwischen den ersten Merkmalen und den zweiten Merkmalen durchgeführt wird.

6. Verfahren nach einem der vorhergehenden Ansprüche,
wobei nur eineindeutige Korrespondenzpaare zugelassen werden und/oder in einer Umgebung eines Korrespondenzpaares keine weiteren Merkmale vorhanden sein dürfen.

7. Verfahren nach Anspruch 5 oder 6,
wobei den ersten Merkmalen eines Korrespondenzpaares die mit dem Laserscanner (12) gemessene Entfernung des zugehörigen zweiten Merkmals zugewiesen wird, um korrigierte erste Merkmale zu gewinnen.

8. Verfahren nach Anspruch 7,
wobei eine zweite Korrespondenzsuche im dreidimensionalen Raum zwischen den korrigierten ersten Merkmalen und den zweiten Merkmalen durchgeführt wird.

9. Verfahren nach einem der vorhergehenden Ansprüche,
wobei die übereinstimmenden Merkmale durch eine insbesondere nichtlineare Optimierung von Versatz und/oder Orientierung bestmöglich übereinander gelegt werden.

10. Verfahren nach Anspruch 9,
wobei eine Güte der Optimierung berechnet wird.

11. Verfahren nach einem der vorhergehenden Ansprüche,
wobei der Laserscanner (12) ein 3D-Laserscanner ist.

12. Verfahren nach einem der vorhergehenden Ansprüche,
wobei die Szenerie für die Kalibrierung belassen wird, wie sie ist, insbesondere kein Kalibrierobjekt in der Szenerie (14) angeordnet wird.

13. Verfahren nach einem der Ansprüche 1 bis 11,
wobei für die Kalibrierung mindestens ein Gegenstand mit einem gewünschten Remissionsverhalten in der Szenerie (14) angeordnet wird, um den Kontrast zu erhöhen.

14. System aus einer Kamera (10) und einem Laserscanner (12) sowie einer Auswertungseinheit (20), die dafür ausgebildet ist, Kamera (10) und Laserscanner zueinander (12) mit einem Verfahren nach einem der vorhergehenden Ansprüche zu kalibrieren.

## Claims

1. A method of calibrating a camera (10) and a laser scanner (12) for their sensor fusion, wherein the camera (10) records a camera image of a scene (14) and the laser scanner (12) at least partly scans the scene (14) with a scanning beam and records a remission image from the respective angular position of the scanning beam and from the intensity determined at the angular position of the scanning beam remitted from the scene (14), wherein an offset and/or a relative orientation between the camera (10) and the laser scanner (12) is determined from a comparison of the camera image and the remission image, wherein distances are determined by the laser scanner (12) with respect to the remission image,
**characterized in that**, for the comparison, despite the original data of the camera image and the remission image being only two-dimensional, a correspondence search for 3D-3D-corresponding features in the camera image and in the remission image is carried out in three-dimensional space by reconstructing distances with respect to the camera image.

2. The method in accordance with claim 1,
wherein the distances in the camera image are reconstructed with the aid of the remission image.

3. The method in accordance with claim 1 or 2,
wherein first features are determined in the camera image and are projected onto predefined distances, in particular onto the unit sphere.

4. The method in accordance with any of the preceding claims,
wherein second features are determined in the remission image and are projected onto predefined distances, in particular onto the unit sphere.

5. The method in accordance with claims 3 and 4,
wherein a first correspondence search is carried out in three-dimensional space between the first features and the second features.

6. The method in accordance with any of the preceding claims,
wherein only one-to-one correspondence pairs are permitted and/or no further features may be present in the surroundings of a correspondence pair.

7. The method in accordance with claims 5 or 6,
wherein the distance of the associated second feature measured by the laser scanner (12) is assigned to the first features of a correspondence pair to acquire corrected first features.

8. The method in accordance with claim 7,
wherein a second correspondence search is carried out in three-dimensional space between the corrected first features and the second features.

9. The method in accordance with any of the preceding claims,
wherein the corresponding features are placed over one another as best as possible by an optimization of offset and/or orientation, in particular a nonlinear optimization.

10. The method in accordance with claim 10,
wherein a quality of the optimization is calculated.

11. The method in accordance with any of the preceding claims,
wherein the laser scanner (12) is a 3D laser scanner.

12. The method in accordance with any of the preceding claims,
wherein the scene for the calibration is left as it is, in particular no calibration object is arranged in the scene.

13. The method in accordance with claims 1 to 11,
wherein at least one object having a desired remission behavior is arranged in the scene (14) for the calibration in order to increase the contrast.

14. A system comprising a camera (10) and a laser scanner (12) as well as an evaluation unit (20) that is configured to calibrate the camera (10) and the laser scanner (12) by using a method according to any of the preceding claims.

## Revendications

1. Procédé d'étalonnage d'une caméra (10) et d'un scanner laser (12) pour leur fusion de capteurs, dans lequel la caméra (10) enregistre une image de caméra d'une scène (14) et le scanner laser (12) balaye au moins partiellement la scène (14) avec un faisceau de balayage et enregistre une image de rémission de la position angulaire respective du faisceau de balayage et de l'intensité déterminée à la position angulaire du faisceau de balayage envoyé par la scène (14), dans lequel un décalage et/ou une orientation relative entre la caméra (10) et le scanner laser (12) est déterminé à partir d'une comparaison de l'image de la caméra et de l'image de rémission, dans lequel des distances sont déterminées par le scanner laser (12) par rapport à l'image de rémission,
**caractérisé en ce que**, pour la comparaison, bien que les données d'origine de l'image de la caméra et l'image de rémission ne soient que bidimensionnelles, une recherche par correspondance des caractéristiques 3D-3D correspondantes de l'image de la caméra et de l'image de rémission est effectuée dans un espace tridimensionnel par reconstruction des distances par rapport à l'image de la caméra.

2. Procédé selon la revendication 1,
dans lequel les distances dans l'image de la caméra sont reconstruites à l'aide de l'image de rémission.

3. Procédé selon la revendication 1 ou 2,
dans lequel les premières caractéristiques sont déterminées dans l'image de la caméra et sont projetées sur des distances prédéfinies, en particulier sur la sphère unitaire.

4. Procédé selon l'une des revendications précédentes,
dans lequel les deuxièmes caractéristiques sont déterminées dans l'image de rémission et sont projetées sur des distances prédéfinies, en particulier sur la sphère unitaire.

5. Procédé selon les revendications 3 et 4,
dans lequel une première recherche de correspondance est effectuée dans un espace tridimensionnel entre les premières caractéristiques et les deuxièmes caractéristiques.

6. Procédé selon l'une des revendications précédentes,
dans lequel seules des paires de correspondance un à un sont autorisées et/ou aucune autre caractéristique ne peut être présente dans l'environnement d'une paire de correspondance.

7. Procédé selon les revendications 5 ou 6,
dans lequel la distance de la seconde caractéristique associée mesurée par le scanner laser (12) est affectée aux premières caractéristiques d'une paire de correspondance pour acquérir des premières caractéristiques corrigées.

8. Procédé selon la revendication 7,
dans lequel une seconde recherche de correspondance est effectuée dans un espace tridimensionnel entre les premières caractéristiques corrigées et les secondes caractéristiques.

9. Procédé selon l'une des revendications précédentes,
dans lequel les caractéristiques correspondantes sont superposées le mieux possible par une optimisation du décalage et/ou de l'orientation, en particulier une optimisation non linéaire.

10. Procédé selon la revendication 10,
dans lequel une qualité de l'optimisation est calculée.

11. Procédé selon l'une des revendications précédentes,
dans lequel le scanner laser (12) est un scanner laser 3D.

12. Procédé selon l'une des revendications précédentes,
dans lequel la scène pour l'étalonnage est laissée telle qu'elle est, en particulier aucun objet d'étalonnage n'est disposé dans la scène.

13. Procédé selon les revendications 1 à 11,
dans lequel au moins un objet ayant un comportement de rémission désiré est disposé dans la scène (14) pour l'étalonnage afin d'augmenter le contraste.

14. Système comprenant une caméra (10) et un scanner laser (12) ainsi qu'une unité d'évaluation (20) qui est configurée pour calibrer la caméra (10) et le scanner laser (12) l'un par rapport à l'autre en utilisant un procédé selon l'une des revendications précédentes.
